Europäisches Patentamt

European Patent Office

Office européen des brevets

(19)

(11) Numéro de publication: **0 245 570**
**A1**

(12) **DEMANDE DE BREVET EUROPEEN**

(21) Numéro de dépôt: 86401031.9

(22) Date de dépôt: **14.05.86**

(51) Int. Cl.⁴: **B60D 1/06** , B62D 53/08 , B60P 3/32

Revendications modifiées conformément à la règle 86 (2) CBE.

(43) Date de publication de la demande: **19.11.87 Bulletin 87/47**

(84) Etats contractants désignés: **AT BE CH DE GB IT LI LU NL SE**

(71) Demandeur: **Cazes, Maurice**
**20 bis, Rue des Pottoks**
**F-64000 Pau(FR)**

(72) Inventeur: **Cazes, Maurice**
**20 bis, Rue des Pottoks**
**F-64000 Pau(FR)**

(54) **Attelage pour caravane ou remorque à capucine.**

(57) L'invention concerne les systèmes d'attelage de caravane ou remorque à un véhicule de tourisme dont l'aplomb du point d'accouplement tombe en avant des points de contact au sol des roues arrières du véhicule tracteur.

L'attelage objet de l'invention est caractérisé par le fait qu'il se monte à l'arrière du véhicule tracteur et qu'il se compose de deux parties : une partie femelle (1) fixée sous le véhicule tracteur et une partie mâle (2) restant solidaire de la caravane ou remorque lors du désaccouplement par l'intermédiaire d'un ensemble constitué d'une barre (14) munie d'une chape (28) venant s'insérer autour d'un rail (29) solidaire du chassis de la caravane ou remorque.

La partie (2) reçoit deux fourreaux verticaux (13, 27) dans lesquels viennent se ficher les extrémités coudées des barres (12,26) de stabilisation au roulis et au tangage qui par ailleurs coulissent dans les tubes horizontaux (11, 25) de deux potences (8, 23) oscillant sur deux paliers verticaux (9, 10 et 34, 35) solidaires du chassis de la caravane ou remorque. Cette même partie reçoit une traverse à coulisses (3) aux extrémités de laquelle se meuvent deux coulisses venant au moyen d'une manivelle (5) enserrer le pavillon du véhicule par l'intermédiaire de deux mâchoires (6, 7).

L'attelage objet de l'invention permet d'utiliser un dispositif de freinage à inertie qui commande les tambours de freins de la caravane ou remorque par un cable guidé par deux poulies solidaires du chassis de la caravane ou remorque (36, 37).

Fig 1

## Attelage pour caravane ou remorque à capucine.

L'invention concerne l'ensemble du système de liaison entre un véhicule de tourisme et une caravane ou remorque à capucine dont le point d'accouplement se situe au dessus du véhicule tracteur et dont l'aplomb tombe à l'intérieur de la surface de sustentation dudit véhicule.

En dehors du fait qu'à ce jour ce type de liaison n'existe pas, les différentes tentatives faites n'ayant pas réussi, les différents modèles déposés soit prennent appui sur la carrosserie du véhicule en des points non prévus pour cet usage : pavillon, coffre, etc...soit entravent l'ouverture des portes d'accès au véhicule ou nécessitent le démontage du couvercle de coffre arrière.

Les inconvénients de ces modèles sont par conséquent évidents : contraintes de la carrosserie pour lesquelles elle n'a pas été prévue entrainant des risques de bris et donc d'accident, accessibilité aux sièges du véhicule mal aisée, modification du véhicule, structure restant à demeure sur le véhicule une fois désaccouplé, etc....

L'attelage objet de l'invention est constitué d'une ferrure en deux parties :

Une partie fixe 1 ancrée de façon permanente sous le véhicule tracteur de telle sorte qu'aucun élément ne dépasse du gabarit du véhicule, aux points prévus par le constructeur.

Une partie mobile 2 venant s'encastrer dans la partie fixe et facilement démontable par simple coulissement. Ce coulissement étant interdit en position encastrée par pincement au moyen d'une vis 22 et d'une goupille 20. Cette partie mobile est suffisamment résistante pour que la quasi totalité des efforts dûs au roulage soient reportés aux points prévus par le constructeur.

Afin d'éviter les vibrations horizontales, verticales, longitudinales et latérales dues à la flexibilité, même extrêmement réduite de la partie 2 et à la circulation sur route bosselée nuisant ainsi au confort, une traverse à coulisses 3 à section carrée, solidaire à l'aplomb de la rotule 4 de la partie mobile 2 de la ferrure d'attelage, manoeuvrée au moyen d'une manivelle 5 latérale unique, venant enserrer le pavillon du véhicule tracteur par deux machoires 6 et 7 fixées aux extrémités des coulisses au niveau de l'encadrement des portes arrières a été prévue.

Afin d'éviter d'avoir à manipuler la partie 2 de la ferrure d'attelage lors du désaccouplement, ce dernier au lieu de se faire au niveau de la rotule 4 se fait par la séparation des deux parties 1 et 2 au moyen d'un ensemble de deux éléments servant à maintenir la partie 2 solidaire de la caravane ou remorque lors de l'accouplement ou du désaccouplement.

Ces deux éléments sont :

Une barre 14 coulissant dans un tube situé dans l'axe de la partie mâle de l'attelage portant à son extrémité une chape 28 suffisamment large pour permettre un débattement vertical. Cette chape est percée et reçoit la goupille 20 lors de la manoeuvre d'accouplement ou de désaccouplement, la barre 14 étant immobilisée par la vis 17.

Un rail horizontal 29 solidaire du chassis de la caravane ou remorque, incurvé suivant un rayon ayant pour origine le point d'accouplement défini par la rotule 4, permettant ainsi un désalignement de la voiture et de la caravane ou remorque.

Afin d'éviter le roulis et le tangage de la caravane ou remorque il a été prévu un double système de stabilisation constitué par deux potences 8 et 23 oscillant sur deux paliers chacune : 9 et 10, 34 et 35 solidaires du chassis de la caravane ou remorque, dont la partie horizontale est constituée par un tube 11 et 25 dans lequel vient coulisser une barre coudée à son extrémité 12 et 26 dont cette extrémité vient se ficher dans un fourreau vertical 13 et 27 solidaire de la partie mobile 2 de l'attelage.

De la position des paliers 9, 10, 34 et 35 dépendent les positions angulaires des barres 12 et 26 par rapport à l'axe de l'ensemble roulant et donc les niveaux des efforts de stabilisation souhaitée au tangage et au roulis.

Il est d'ailleurs à noter qu'un seul système pourrait suffire pour agir à la fois sur le tangage et le roulis. Il s'agit de celui qui serait perpendiculaire à l'axe de l'ensemble roulant.

Les systèmes de stabilisation définis ci-dessus, s'il donnent satisfaction peuvent être améliorés car tels qu'ils sont conçus ils maintiennent le véhicule tracté et le véhicule tracteur sur la même assiette mais n'amortissent pas leurs oscillations, n'ayant qu'une fonction élastique.

Le dispositif proposé est constitué par une pièce en "V" 30 tournant autour d'un axe vertical 31 situé entre la rotule d'attelage 4 et la partie supérieure de l'élement mobile 2 de la ferrure d'attelage. Aux extrémités des branches du "V" viennent se fixer sur des axes horizontaux et perpendiculaires à l'axe longitudinal de la caravane ou remorque des dispositifs élastiques amortissants 32 et 33 dont l'autre extrémité vient de la même manière se fixer sur le chassis de la caravane ou remorque.

Ces dispositifs peuvent être seulement amortissants. Ils peuvent donc prendre la forme de ressorts à boudin, d'amortisseurs hydrauliques, de blocs caoutchouc, d'éléments gonflables, etc... ou d'une combinaison de ces éléments.

Leur montage leur permet de basculer lors du fonctionnement du frein à inertie de la caravane ou remorque et par conséquent de ne pas entraver son fonctionnement.

Au delà de l'ensemble de la ferrure d'attelage le système de liaison est constitué par un dispositif de freinage par inertie de fabrication courante mais dont la transmission des efforts aux essieux se fait par cable se mouvant sur un chemin défini par deux poulies 36 et 37 solidaires du chassis de la caravane ou remorque. Ces poulies étant nécessaires du fait du désalignement du dispositif de freinage par inertie et des leviers de commande des machoires de freins de par la conception même de la caravane ou remorque.

Les avantages de cet attelage pour caravane ou remorque à capucine sont particulièrement importants :

Il permet tout d'abord la création de caravanes ou remorques à capucine. Ces véhicules sont particulièrement intéressants du fait de leur habitabilité par rapport à la longueur hors tout de l'ensemble roulant. En effet toute une partie vient au dessus du véhicule tracteur et l'intervalle entre véhicule tracteur et véhicule tracté n'est plus nécessaire puisqu'il n'y a pas de timon.

Il permet ensuite, du fait de la position de la rotule d'attelage d'obtenir que tous les efforts auxquels elle est soumise viennent se reporter à l'intérieur de la surface de sustentation du véhicule tracteur et en particulier ceux dûs au freinage qui viennent accroître l'adhérence des roues au sol de ce dernier.

Il permet aussi une maniabilité exceptionnelle puisque véhicule tracteur et véhicule tracté peuvent se mettre à plus de 90°. De ce fait l'ensemble roulant peut tourner sur place.

Il donne une excellente stabilité à l'ensemble roulant pour les deux raisons suivantes :
La première c'est que le point d'accouplement est très éloigné des points de contact des roues au sol et le plan du triangle formé par ces points n'est pas horizontal comme dans un attelage classique mais incliné à environ 30°. De ce fait la tendance à la mise en lacets est pratiquement nulle.
La deuxième c'est que les systèmes de stabilisation au roulis et au tangage tendent à maintenir les deux véhicules dans des plans parallèles et obligent donc l'ensemble roulant à virer " à plat ".

Il permet un accouplement et un désaccouplement aussi rapides que pour un attelage classique et laisse le véhicule tracteur désaccouplé libre de tout élément ou structure apparent.Seule la partie 1 de l'attelage reste sous le véhicule tracteur.

Le système de transmission par poulies des efforts de freinage permet l'utilisation d'un dispositif de freinage par inertie absolument standard.

La conception même et la résistance de l'élément 2 en particulier évite tout report d'effort trop important sur le pavillon du véhicule tracteur. Effort restant toujours en dessous des limites de charge autorisées.

Enfin cet attelage ne nécessite aucun effort humain, les efforts nécessaires à l'accouplement et au désaccouplement étant faits par le véhicule tracteur qui avance pour désaccoupler et recule pour accoupler.

Pour effectuer le désaccouplement il suffit :
D'aligner approximativement véhicule tracteur et véhicule tracté,
De tourner la manivelle 5 pour libérer le pavillon,
De libérer la barre 14 en débloquant le levier 17,
D'insérer le rail 29 dans la chape 28 en faisant coulisser la barre 14,
D'enlever la goupille 20 de son logement pour l'introduire dans les trous de la chape 28. A cet instant les éléments 1 et 2 ne sont plus solidarisés que par pincement de la vis 22.
De bloquer le levier 17 immobilisant la barre 14,
De libérer la partie mâle en desserrant la vis 22,
De soulager la caravane ou remorque par sa roue jockey et de mettre en action son frein de parking,
De faire avancer au moteur le véhicule tracteur.

L'accouplement se fait de manière identique inverse.

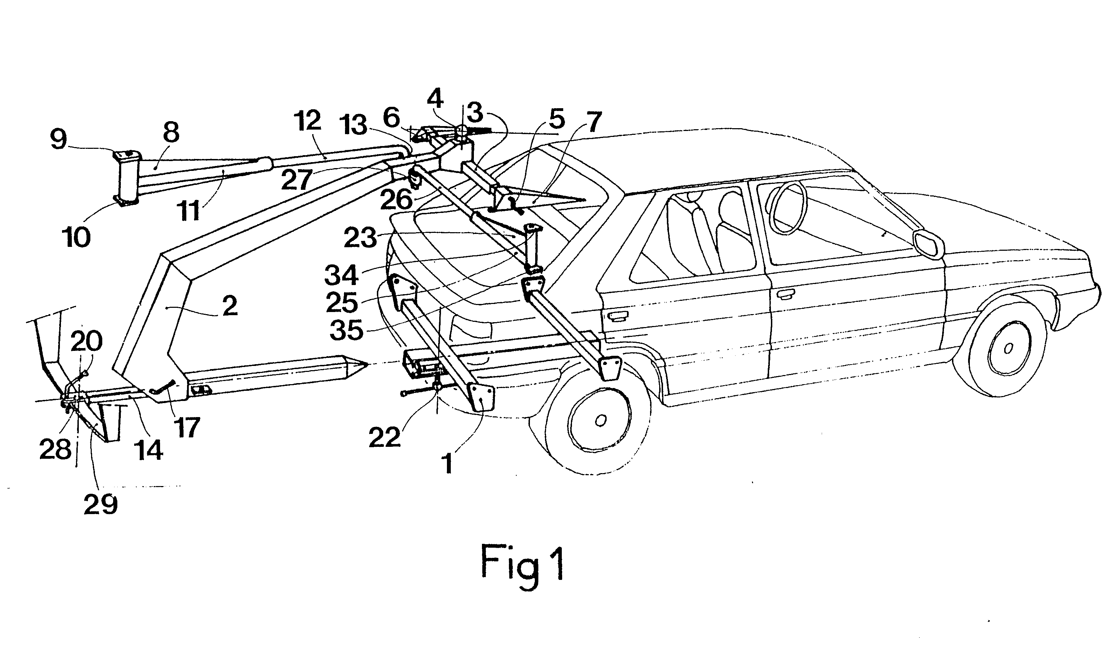

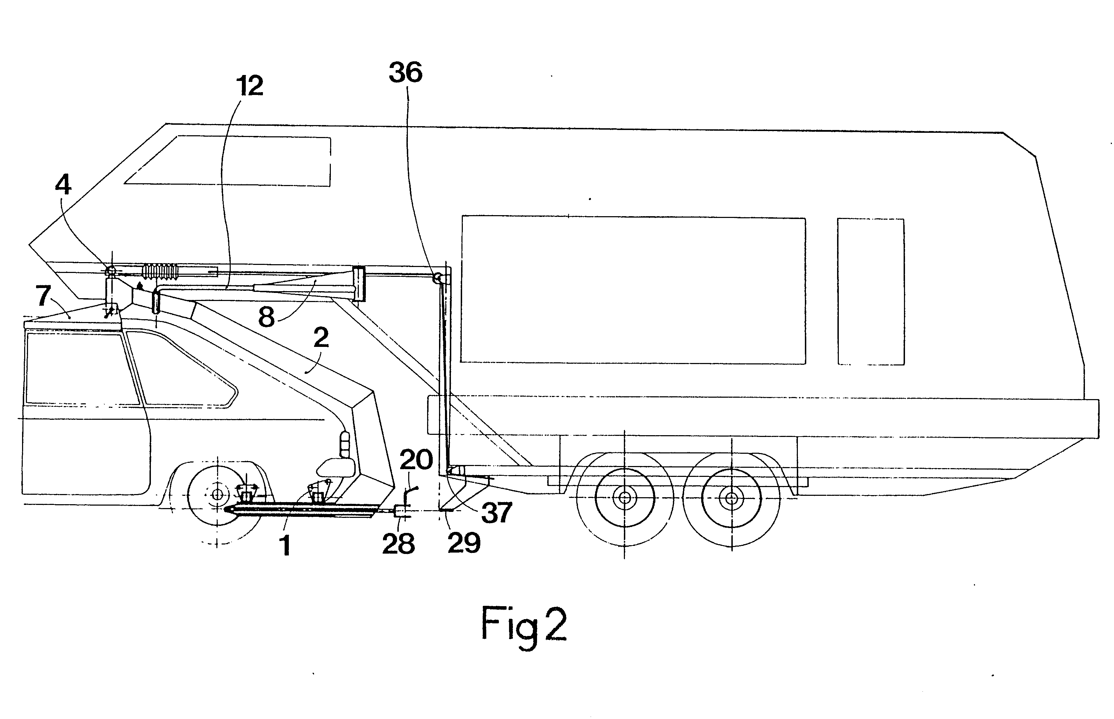

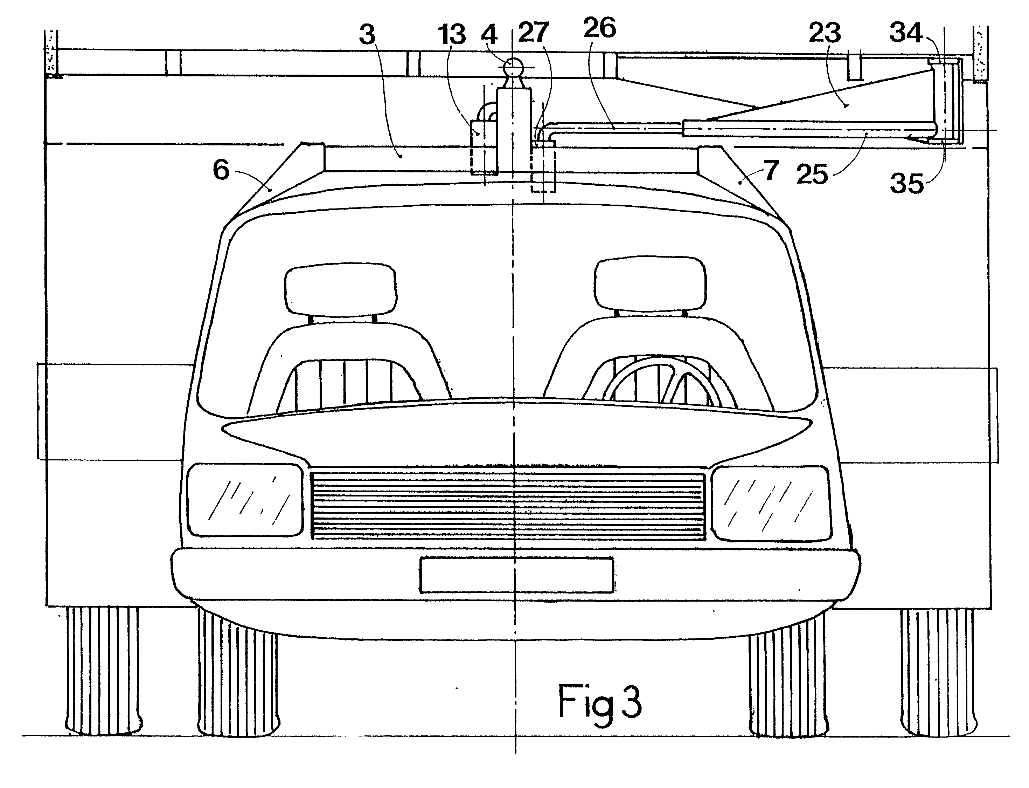

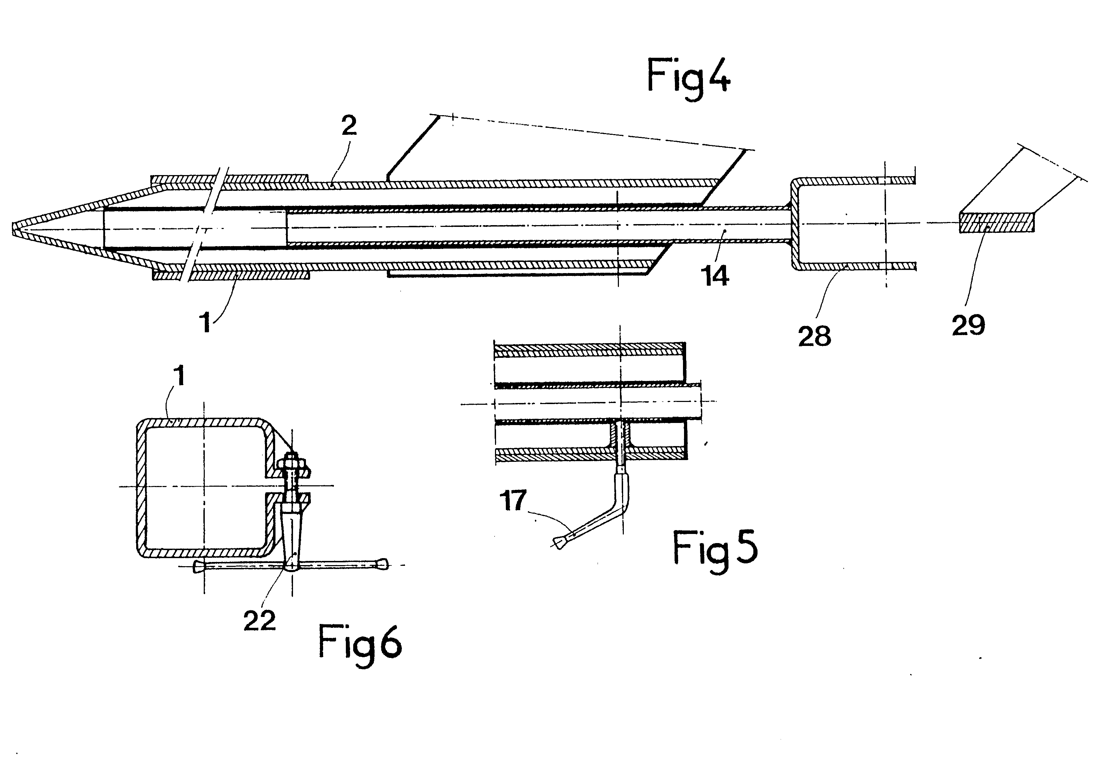

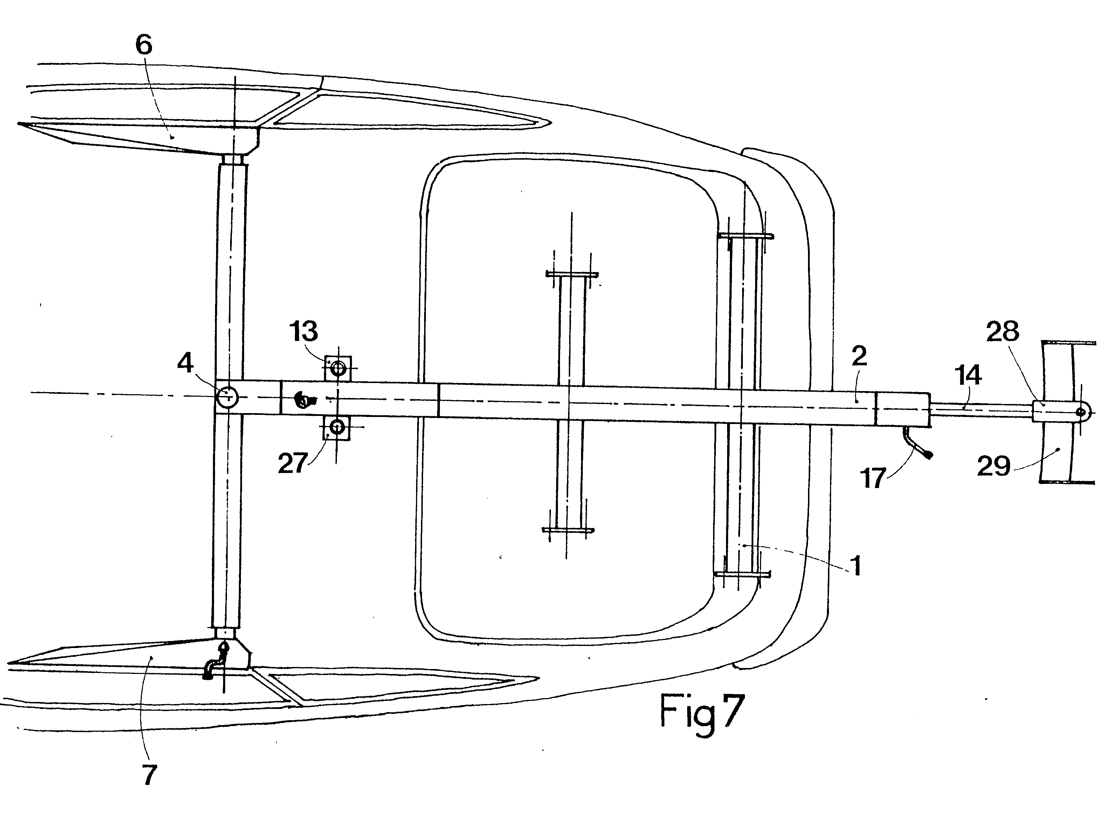

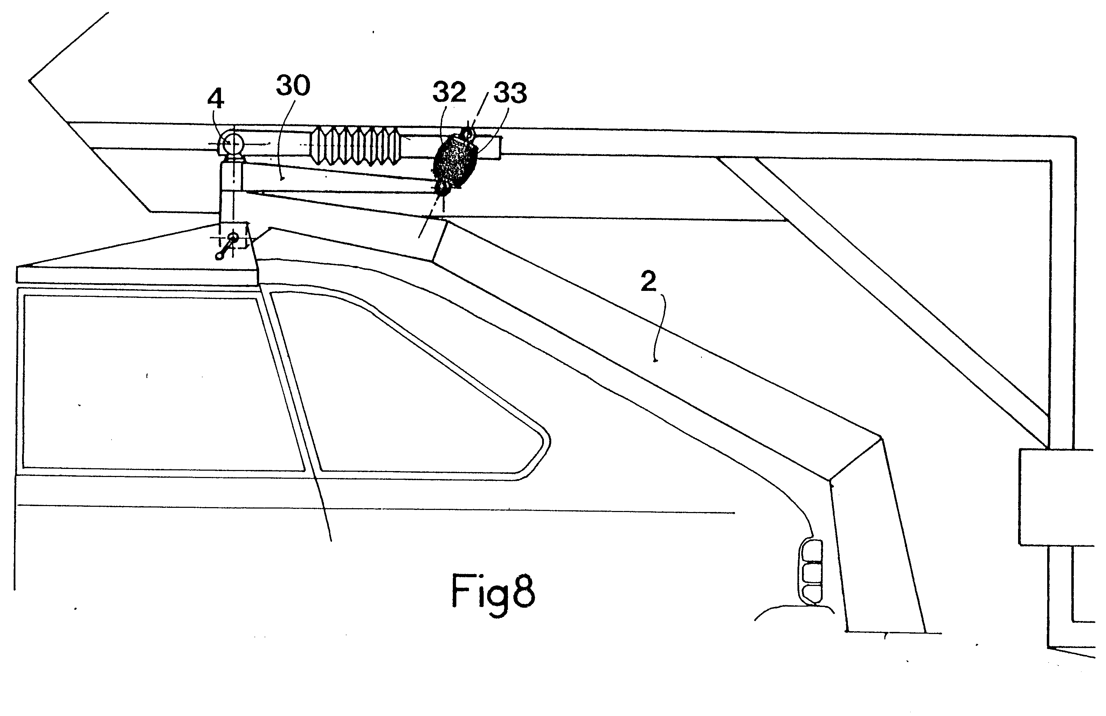

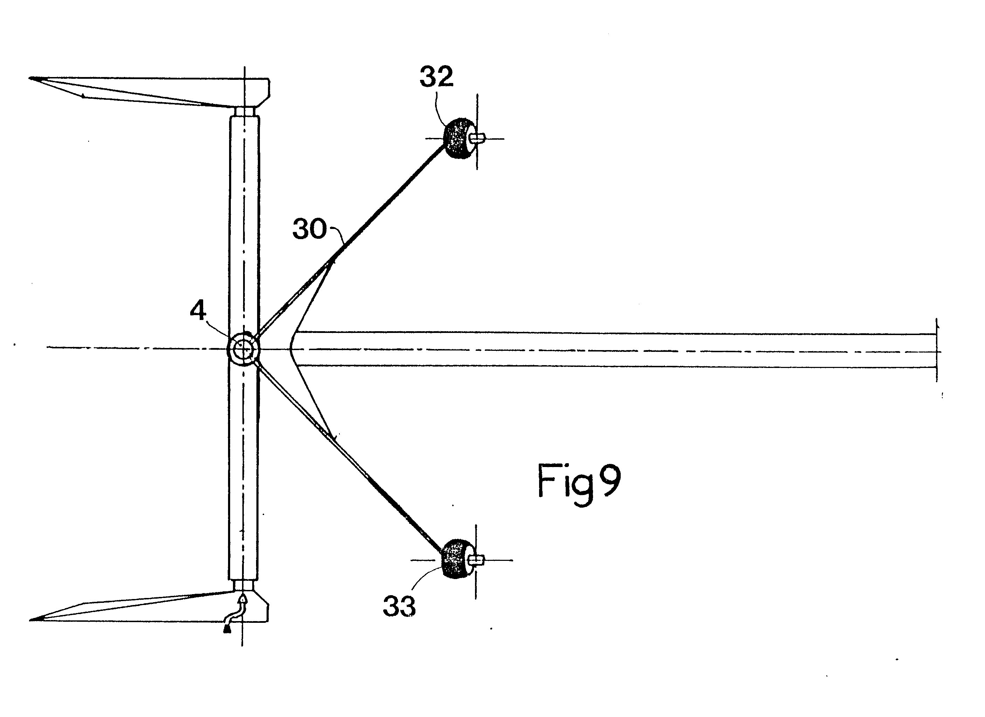

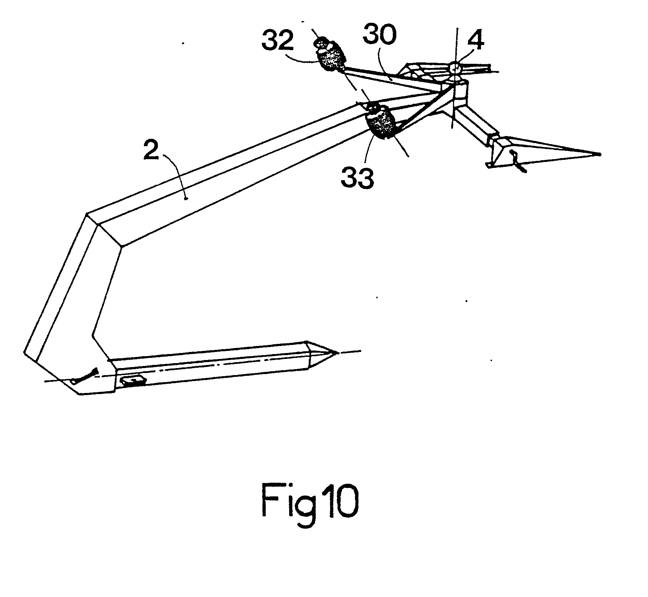

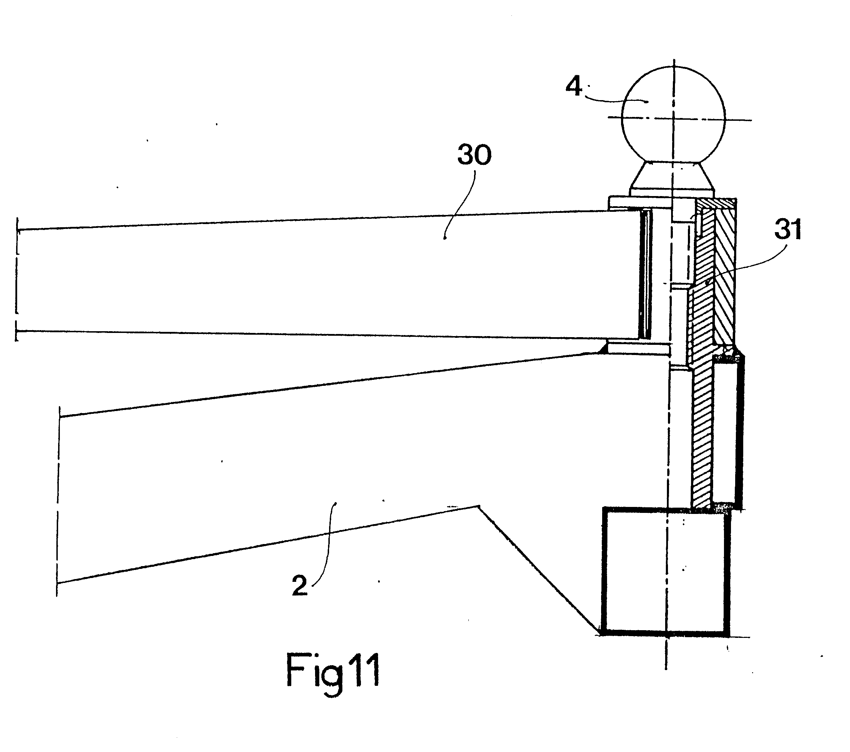

## Revendications

1. Attelage pour caravane ou remorque tractée par un véhicule de tourisme caractérisé en ce qu'il est constitué par deux éléments : le premier (1) étant fixé à demeure sous le soubassement du véhicule tracteur, aux points d'ancrage prévus par son constructeur et le deuxième (2), instantanément démontable en porte à faux au dessus du pavillon du véhicule, venant se fixer à l'arrière de ce dernier par emboitement d'une extrémité dans l'élément fixe (1) et portant la rotule d'accouplement (4) à son autre extrémité de telle sorte que son aplomb soit situé en avant des points d'appui au sol des roues arrières du véhicule.

2. Attelage selon la revendication 1 dans lequel l'élément démontable (2) reste solidaire de la caravane ou remorque lors du désaccouplement au moyen d'un système caractérisé en ce qu'il est constitué par deux éléments : une barre (14) coulissant dans l'axe de la partie mâle de l'attelage, portant en son extrémité une chape large (28) et percée, dont la course est réglée par une vis (17) et par un rail incurvé (29) solidaire du chassis et autour duquel vient s'insérer la chape (28), ce système permettant aux deux véhicules: tracteur et tracté d'être désalignés lors des manoeuvres d'accouplement ou de désaccouplement.

3. Attelage selon la revendication 1 muni d'un double système de stabilisation au roulis et au tangage caractérisé en ce que ces systèmes, dont la position angulaire par rapport à l'axe de la caravane ou remorque peut varier, sont caractérisés par des potences (8) et (23) oscillant chacune sur deux paliers verticaux (9, 10) et (34, 35) solidaires du chassis de la caravane ou remorque dont la partie horizontale est constituée par un tube (11, 25) dans lequel vient coulisser une barre coudée à son extrémité (12, 26), extrémité venant se ficher dans un fourreau vertical (13, 27) solidaire de la partie démontable (2) de l'attelage.

4. Attelage selon la revendication 1 muni d'un système de stabilisation au roulis et au tangage caractérisé en ce qu'il est constitué par un élément en " V " (30) tournant autour d'un axe vertical (31) situé entre la rotule d'accouplement (4) et la partie supérieure de l'élément démontable (2) de l'attelage, à l'aplomb de ladite rotule et de deux éléments élastiques amortissants ou les deux à la fois (32, 33) fixés à l'une de leurs extrémités au chassis de la caravane ou remorque et à l'autre à l'extrémité des branches du " V " par des axes perpendiculaires à l'axe longitudinal de la caravane ou remorque permettant ainsi le fonctionnement du frein à inertie.

5. Attelage selon la revendication 1 muni d'une traverse à coulisses (3) solidaire de l'élément mobile (2) de l'attelage caractérisée en ce qu'elle se compose d'un élément central perpendiculaire à l'élément (2) dans les extrémités duquel se meuvent deux coulisses en sens opposés au moyen d'une manivelle latérale unique (5), portant à leurs extrémités deux mâchoires (6, 7) venant prendre appui sur le pavillon du véhicule tracteur et s'insérant dans la partie supérieure de l'encadrement des portes arrières.

6. Attelage selon la revendication 1 caractérisé en ce qu'il commande un dispositif de freinage par inertie commandant lui même les leviers de freins par un cable se mouvant sur un chemin défini par deux poulies (36, 37) solidaires du chassis de la caravane ou remorque.

Revendications Amendées

1. Attelage pour caravane ou remorque caractérisé en ce qu'il est constitué par deux éléments : le premier (1) étant fixé à demeure sous le soubassement du véhicule tracteur aux points d'ancrage prévus par son constructeur et le deuxième (2), instantanément démontable, en porte à faux au dessus du pavillon du véhicule, venant se fixer exclusivement à l'arrière de ce dernier par emboitement coulissant longitudinal d'une extrémité dans l'élément fixe (1) et portant la rotule d'accouplement (4) à son autre extrémité de telle sorte que son aplomb soit situé en avant des points d'appui au sol des roues arrières du véhicule.

2. Attelage selon la revendication 1 dans lequel l'élément démontable (2) reste solidaire de la caravane ou remorque lors de l'accouplement ou du désaccouplement au moyen d'un système caractérisé en ce qu'il est constitué par deux éléments : une barre (14) coulissant dans la partie démontable (2) directement ou par l'intermédiaire d'un fourreau qui lui serait relié, portant en son extrémité une chape large (28) fermée par une goupille amovible (20) ou par tout autre système de fermeture rapide, dont la course est réglée par une vis (17), ou une crémaillère ou tout autre dispositif de blocage, et par un rail (29) incurvé suivant un rayon ayant son origine à l'aplomb de la rotule (4), solidaire du chassis de la caravane ou remorque, autour duquel vient s'insérer la chape (28) lors de l'accouplement ou du désaccouplement, ce système permettant aux deux véhicules : tracteur et tracté d'être désalignés pendant ces manoeuvres et surtout d'éviter toute manipulation de l'élément démontable (2) qui de ce fait peut avoir un poids important.

3. Attelage selon l'une quelconque des revendications 1 et 2 muni d'un double système de stabilisation au roulis et au tangage caractérisé en ce que ces systèmes, dont la position angulaire par rapport à l'axe de la caravane ou remorque peut varier, sont constitués par des potences (8) et (23) oscillant chacune sur deux paliers verticaux (9, 10) et (34, 35) solidaires du chassis de la caravane ou remorque dont la partie horizontale est constituée par un tube (11, 25) dans lequel vient coulisser une barre coudée à son extrémité (12, 26), extrémité venant se ficher dans un fourreau vertical (13 27) solidaire de la partie démontable (2) de l'attelage.

4. Attelage selon l'une quelconque des revendications 1 et 2 muni d'un système de stabilisation au roulis et au tangage caractérisé en ce qu'il est constitué par un élément en V (30) tournant autour d'un axe vertical (31) situé entre la rotule d'accouplement (4) et la partie supérieure de l'élément démontable (2) de l'attelage à l'aplomb de ladite rotule et de deux éléments élastiques, amortissants ou les deux à la fois (32, 33) fixés pratiquement verticalement à l'une de leurs extrémités au chassis de la caravane ou remorque et à l'autre à l'extrémité des branches du V par des axes perpendiculaires à l'axe longitudinal de la caravane ou remorque permettant ainsi le fonctionnement du frein à inertie.

5. Attelage selon l'une quelconque des revendications 1, 2, 3 4 muni d'une traverse reportant sur le pavillon du véhicule une partie des efforts dans la limite autorisée par le constructeur de ce dernier caractérisée en ce qu'elle se compose d'un élément central (3) solidaire et perpendiculaire à l'élément (2), à l'intérieur duquel et dans son axe est immobilisée en translation en son milieu une tige filetée à pas à droite d'un côté et à pas à gauche de l'autre, commandant par une manivelle disposée en l'une de ses extrémités les translations opposées de deux coulisses munies à leur extrémité intérieure à l'élément central d'un écrou à pas à droite pour l'une et pas à gauche pour l'autre et à leur extrémité extérieure à l'élément central d'une machoire (6, 7) à grande surface de contact adaptée à la forme du pavillon dans sa partie supérieure et dont la partie inférieure s'insère dans la partie supérieure de l'encadrement des portes arrières, cette machoire pouvant également se prendre sur la gouttière du véhicule.

6. Attelage selon l'une quelconque des revendications 1, 2, 3, 4, 5 caractérisé en ce qu'il commande un dispositif de freinage par inertie commandant lui-même les leviers de freins par un cable se mouvant sur un chemin défini par deux poulies (36, 37) solidaires du chassis de la caravane ou remorque.

Fig 1

9 8 12 13 6 4 3 5 7
27
11
10
26
2 23
34
25
35
20
17
22
28 14 1
29

0 245 570

Fig 2

0 245 570

3  13 4 27  26    23   34

6    7 25    35

Fig 3

0 245 570

Fig 4

2

14

28

29

1

0 245 570

1

22

Fig 6

17

Fig 5

Fig 7

0 245 570

Fig8

Fig 9

Fig 10

Fig 11

0 245 570

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| X | FR-A-2 359 008 (D. ROBIN) <br> * Page 3, ligne 24 - page 4, ligne 12; figures 1-6 * | 1 | B 60 D 1/06 <br> B 62 D 53/08 <br> B 60 P 3/32 |
| Y | | 5 | |
| A | | 6 | |
| | --- | | |
| Y | US-A-4 101 061 (U-HAUL INTERNATIONAL) <br> * Résumé; figure 1 * | 5 | |
| | --- | | |
| X | US-A-3 870 341 (D. YOUNGER) <br> * Colonne 4, ligne 50 - colonne 5, ligne 43; figures 1-4 * | 1 | |
| | | | DOMAINES TECHNIQUES RECHERCHES (Int. Cl. 4) |
| A | | 2 | B 60 D <br> B 62 D <br> B 60 P <br> B 60 R |
| | --- | | |
| X | FR-A-2 558 423 (M. CAZES) <br> * Page 3, lignes 27-34 * | 1 | |
| | --- | | |
| A | FR-A-2 231 557 (C. WINTER) <br> * Page 13, lignes 19-32; figures 1,4 * | 1 | |
| | --- | | |
| A | US-A-4 420 169 (W. TAYLOR) <br> * Colonne 3, lignes 42-50; figure 4 * | 2 | |
| | ---     -/- | | |

Le présent rapport de recherche a été établi pour toutes les revendications

| Lieu de la recherche | Date d'achevement de la recherche | Examinateur |
|---|---|---|
| LA HAYE | 19-01-1987 | LINTZ C.H. |

## DOCUMENTS CONSIDERES COMME PERTINENTS

Page 2

| Catégorie | Citation du document avec indication. en cas de besoin. des parties pertinentes | Revendication concernee | CLASSEMENT DE LA DEMANDE (Int Ci 4) |
|---|---|---|---|
| A | FR-A-1 390 663 (K. VERWEYEN) <br> * Figures 1,2 * | 3 | |
| | --- | | |
| A | DE-C- 602 977 (DR. H. ZUTT) <br> * Page 2, lignes 29-48; figure 1 * | 6 | |
| | ----- | | |

DOMAINES TECHNIQUES RECHERCHES (Int Cl 4)

Le présent rapport de recherche a été etabli pour toutes les revendications

| Lieu de la recherche | Date d achevement de la recherche | Examinateur |
|---|---|---|
| LA HAYE | 19-01-1987 | LINTZ C.H. |